(19) Europäisches Patentamt
European Patent Office
Office européen des brevets

(11) EP 4 787 754 A1

# (12) EUROPEAN PATENT APPLICATION

(43) Date of publication:
**05.08.2026 Bulletin 2026/32**

(21) Application number: **26153353.3**

(22) Date of filing: **22.01.2026**

(51) International Patent Classification (IPC):
***H04L 1/1867*** *(2023.01)*

(52) Cooperative Patent Classification (CPC):
**H04L 1/188; H04L 1/189**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.01.2025 US 202519040717**

(71) Applicant: **Microsoft Technology Licensing, LLC Redmond, WA 98052 (US)**

(72) Inventors:
- **PAPAMICHAEL, MICHAEL KONSTANTINOS Redmond, 98052 (US)**
- **DOHADWALA, MOHAMMAD SAIFEE Redmond, 98052 (US)**
- **ZHAO, ZHIPENG Redmond, 98052 (US)**

(74) Representative: **CMS Cameron McKenna Nabarro Olswang LLP Cannon Place 78 Cannon Street London EC4N 6AF (GB)**

## (54) ADAPTIVE RETRANSMISSION WITH BIASED MOVING AVERAGE RETRANSMISSION TIMES

(57) The present disclosure generally relates to systems and methods for adaptively retransmitting data packets utilizing a biased moving average retransmission time. Systems and methods described herein avoid the risks of retransmission flooding and congestion collapse common to existing out-of-order packet transmission systems by generating, updating, and utilizing a biased moving average retransmission time that adapts to a specific latency of a data flow. By tailoring fast and regular timeout events to this biased moving average retransmission time, the systems and methods described herein can dynamically adapt to in-the-moment network conditions to ensure that data packets reach their intended endpoints.

100
$T_1$
112a
$T_1$
112b
$T_1$
112c
$T_0$
110a
$T_0$
110b
Network Endpoint 105a
Adaptive Retransmission System 102a
Biased Moving Average Retransmission Time 104a
Sending Unit 106a
Receiving Unit 108a
Network Endpoint 105b
Adaptive Retransmission System 102b
Biased Moving Average Retransmission Time 104b
Sending Unit 106b
Receiving Unit 108b

FIG. 1



Processed by Luminess, 75001 PARIS (FR)

## Description

## BACKGROUND

Large-scale distributed workloads such as High-Performance Computing (HPC) and Artificial Intelligence (AI) generally utilize extensive communication of data packets among compute nodes. As such, performance of these complex systems regularly depends on the efficiency of those communications. Often, communication patterns (e.g., "collectives") happen in a synchronized manner across multiple participants in such distributed systems. These collectives transmit packets among computing endpoints to perform various functions that take place within larger high-performance systems.

Generally, such communication collectives rely on network transfer protocols to detect and recover from packet losses that occur during packet transmissions. In some existing protocols where all packets of a flow take the same path, receiving endpoints expect packets to arrive in-order (i.e., in a consecutive sequence based on packet number). In those protocols, a missing packet is quickly detected and retransmitted using sequence numbers and/or timeout periods.

Other transfer protocols allowed packets to utilize multiple paths-thereby arriving at the receiving endpoint out-of-order. For example, a sequence of packets may arrive out-of-order because some packets in the sequence took one route while other packets in the sequence took a different route to the same endpoint. In those protocols, missing sequence numbers cannot be used to reliably detect dropped packets because it is difficult to determine whether a particular packet is dropped or rather has taken a different path and will arrive later. As such, conventional fixed timeout-based retransmission protocols are not effective in detecting and retransmitting dropped packets when the packets are received out-of-order. For example, within the out-of-order context, timeout-based retransmission protocols are either too aggressive-causing spurious retransmissions and duplicates for packets that have elevated latency, or too conservative-delaying needed retransmissions for packets that have actually be dropped.

The subject matter in the background section is intended to provide an overview of the overall context for the subject matter disclosed herein. The subject matter discussed in the background section should not be assumed to be prior art merely as a result of its mention in the background section. Similarly, a problem mentioned in the background section or associated with the subject matter of the background section should not be assumed to have been previously recognized in the prior art.

## BRIEF DESCRIPTION OF THE DRAWINGS

FIG. 1 illustrates an example overview of a digital environment where instances of an adaptive retransmission system generate and update biased moving average retransmission times to retransmit data packets while adapting to currently network conditions in accordance with one or more embodiments.

FIGS. 2A, 2B, and 2C illustrate example sequences of data packet transmissions and acknowledgements both in-order and out-of-order in accordance with one or more embodiments.

FIGS. 3A and 3B illustrate an example graphs of a general moving average retransmission time compares to a biased moving average retransmission time in reacting to network latency spikes in accordance with one or more embodiments.

FIG. 4 illustrates an example graph showing how the adaptive retransmission system triggers various timeout events using the biased moving average retransmission time to recover from potential data packet drops in accordance with one or more embodiments.

FIG. 5 illustrates a block diagram of the adaptive retransmission system operating within a network endpoint in accordance with one or more embodiments.

FIGS. 6A and 6B illustrate overviews of steps taken by the adaptive retransmission system in leveraging the biased moving average retransmission time to recover from data packet drops in accordance with one or more embodiments.

FIG. 7 illustrates certain components that may be included within a computer system in accordance with one or more embodiments.

## DETAILED DESCRIPTION

The present disclosure relates to systems, methods, and computer-readable media for adaptively retransmitting data packets utilizing a biased moving average retransmission time. As discussed above, existing protocols experience difficulties in determining when to retransmit potentially dropped packets in systems that allow endpoints to receive packets out-of-order. Such protocols generally suffer from a variety of drawbacks. For example, existing protocols typically fail to wait long enough to retransmit a potentially dropped packet and spuriously retransmits the packet before it is necessary. Alternatively, existing protocols wait too long to retransmit a packet in an attempt to be sure that the packet was indeed dropped. As such, existing protocols often result in situations where the networking system is either unnecessarily flooded with retransmitted packets or eventually collapses from bottlenecking issues arising from high levels of hang time.

To solve these problems, the present disclosure describes an adaptive retransmission system that retransmits data packets in a way that adapts to the specific network conditions of the data flow for those packets. For example, the adaptive retransmission system keeps track of a data flow's latency using per-packet time stamping. The adaptive retransmission system also determines a biased moving average retransmission time for that data flow that allows the adaptive retransmission system to gracefully handle latency spikes within that data flow. In one or more embodiments, the adaptive retransmission system uses the biased moving average retransmission time to trigger one of two retransmission modes: 1) a fast retransmission mode that is limited to a single retransmission in flight and intended to react very quickly to recover from single packet drop events and 2) a regular retransmission mode that retransmits all unacknowledged packets of a flow. By utilizing both retransmission modes, the adaptive retransmission system can dynamically adapt to in-the-moment network conditions while ensuring that all data packets reach their intended endpoints.

In one or more embodiments, the adaptive retransmission system improves computing systems in various ways. For example, in at least one embodiment, the adaptive retransmission system improves the efficiency of computing nodes connected in network collectives. As mentioned above, existing systems are often inefficient in the face of out-of-order packet transmissions from one network endpoint to another. When a network experiences increased latency, existing systems often waste computing resources by spuriously retransmitting and/or duplicating packets that have not yet arrived at a receiving endpoint. Alternatively, existing system waste additional computing resources by waiting too long to retransmit packets that have actually been dropped.

The adaptive retransmission system avoids this level of computing resource waste by leveraging a biased moving average retransmission time that adjusts quickly to network latency. For example, the adaptive retransmission system utilizes the biased moving average retransmission time to identify packets that have likely been dropped and to ensure that these potentially dropped packets are retransmitted quickly. As such, network collectives utilizing the adaptive retransmission system have fewer resource bottlenecks and less hang time.

The adaptive retransmission system can also be implemented as a lightweight hardware solution that avoids the types of computational resource waste mentioned above without introducing additional processing time into a system. For example, in one embodiment, the adaptive retransmission system stores the biased moving average retransmission time as a whole number in a single hardware register. Following this, the adaptive retransmission system updates and utilizes the biased moving average according to quick, register-based operations that introduce only nominal processing into the overall system.

In one or more implementations, the methods and systems performed by the adaptive retransmission system reference multiple terms. For example, as referenced herein, a "collective" or "communication collective" refers to an exchange of data among nodes. For example, in high-performance computing environments, tasks are often distributed across compute nodes to improve efficiency and performance. Thus, a communication collective can dictate how information moves among those nodes prior to, during, or following completion of those tasks. As discussed in greater detail below, some examples or communication collectives can include a broadcast collective, a reduce collective, and an all reduce collective.

As used herein, a "network endpoint" refers to a computing device that is connected to a computer network. In one or more embodiments, a network endpoint can create, receive, manipulate, and transmit data. As further used herein, a "data packet" or "packet" refers to a unit of data that is formatted for transmission over a network from one network endpoint or other mid-level compute node to another. In one or more embodiments, a data packet can include a header containing source address information, destination address information, and one or more timestamps. A data packet can further include a payload of actual data being transmitted. In some embodiments, a data packet also includes a trailer that ensure data accuracy and integrity.

As mentioned above, data packets can be transmitted and retransmitted. In one or more embodiments, a receiving endpoint sends an acknowledgement (ACK) following receipt of a data packet. If the sending endpoint does not receive such an acknowledgement, the sending endpoint may retransmit the same data packet via the same transmission mechanism. In one or more embodiments, a "retransmission time" refers to an amount of time that the sending endpoint will wait to receive an acknowledgement of a particular packet prior to retransmitting that packet. It follows that a "timeout event" occurs once the retransmission time elapses and it is determined that the packet should be retransmitted.

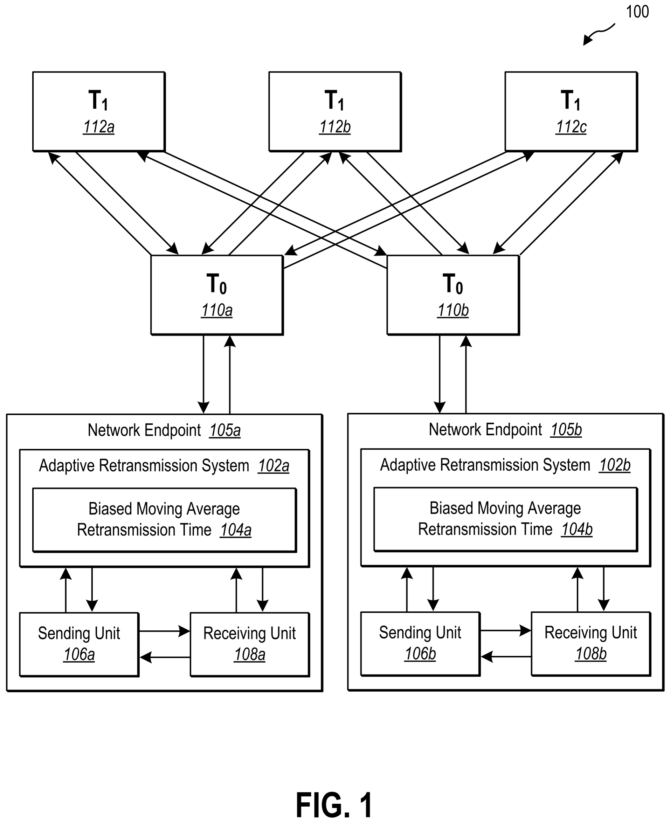

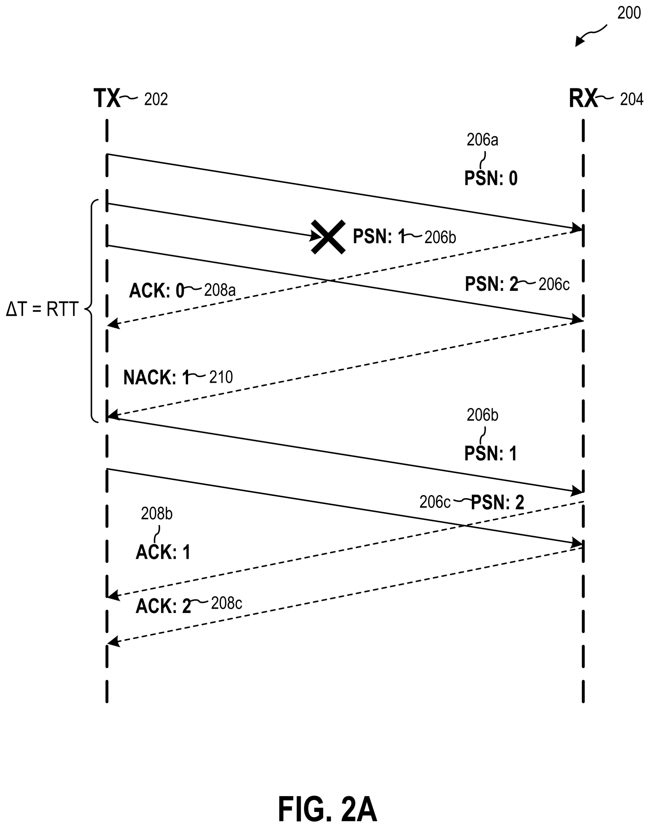

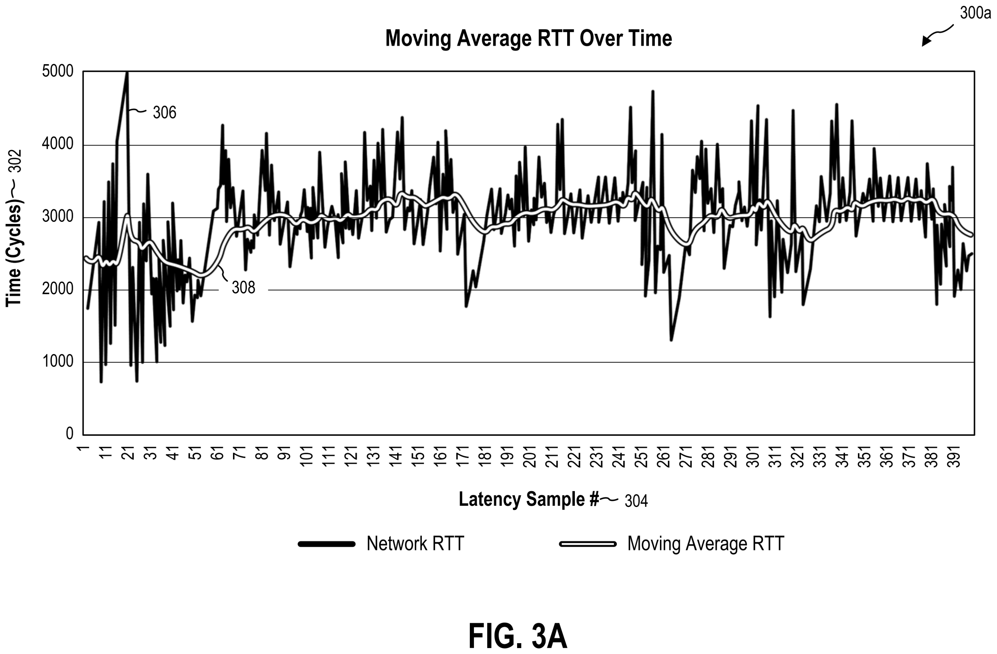

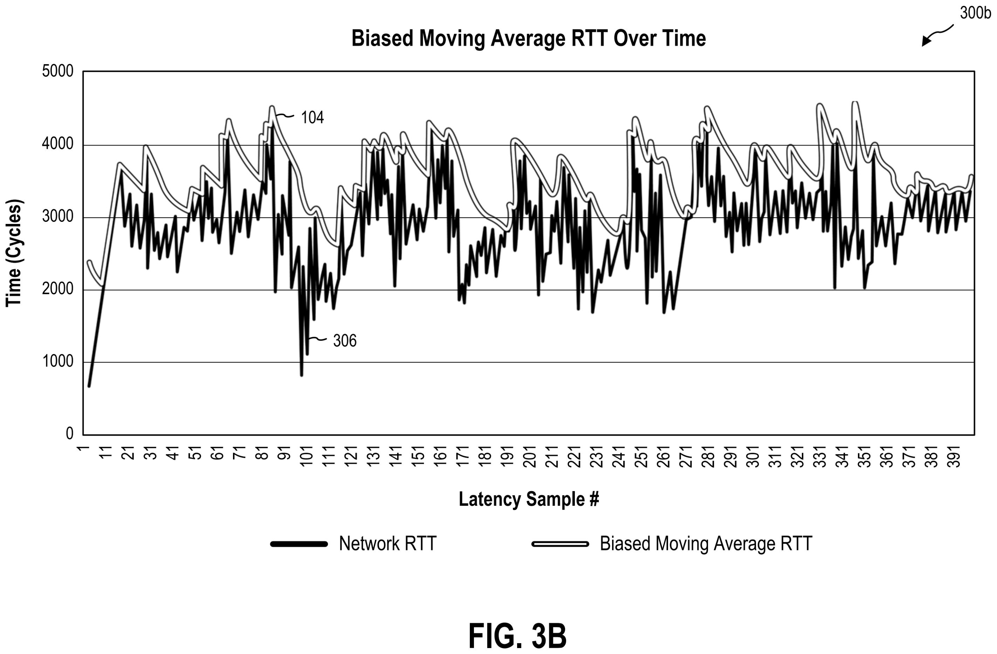

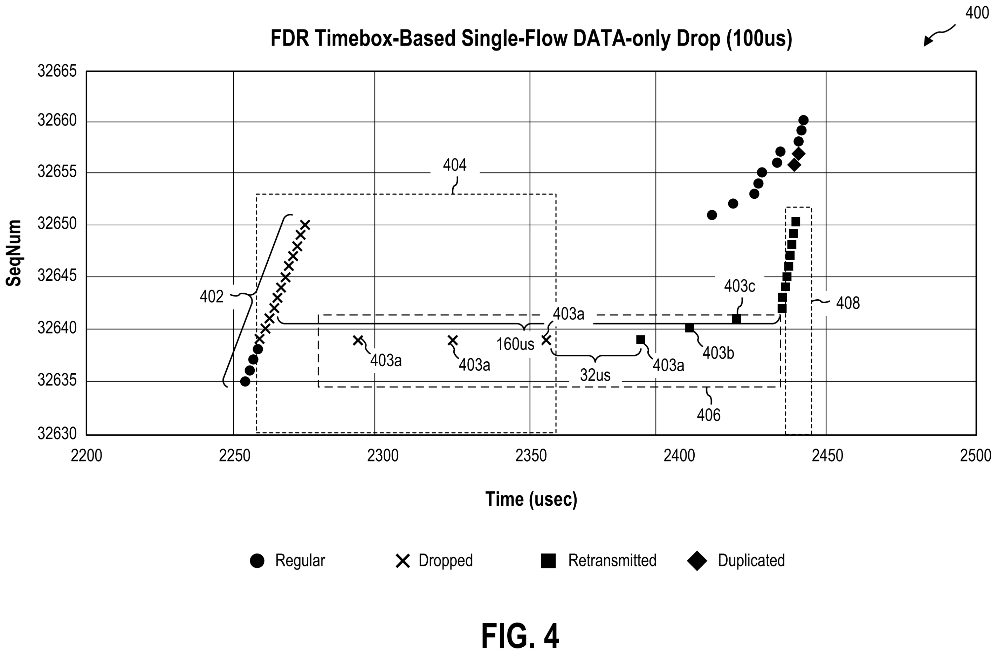

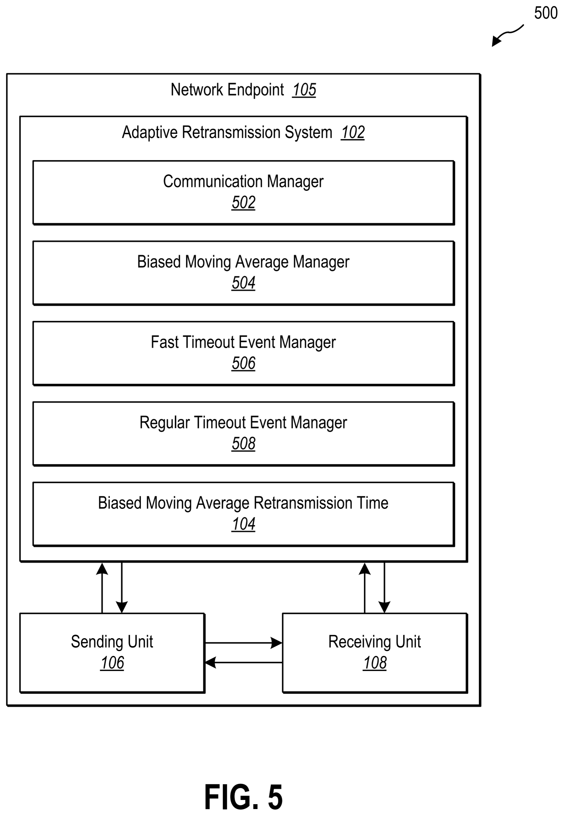

Additional details regarding example implementations of the adaptive retransmission system will now be discussed in connection with the following figures. To illustrate, FIG. 1 provides an example overview of a networked environment where the adaptive retransmission system operates to efficiently retransmit network packets while accounting for spikes in network latency. FIGS. 2A-2C illustrate example transmission sequences for data packets both in-order and out-of-order. FIGS. 3A and 3B illustrate how a biased moving average retransmission time reacts to network latency spikes versus a typical moving average retransmission time. FIG. 4 illustrates an example of how the adaptive retransmission system utilizes the biased moving average retransmission time to retransmit packets during a fast timeout event and a regular timeout event. FIG. 5 illustrates additional detail associated with the adaptive retransmission system.

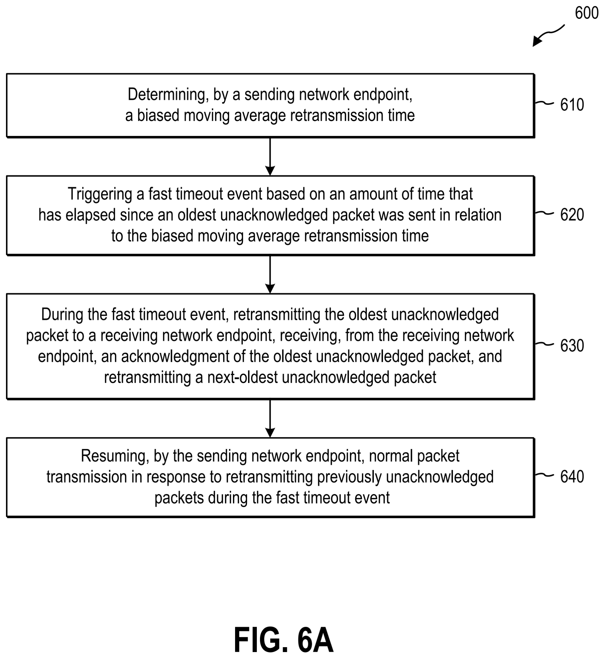

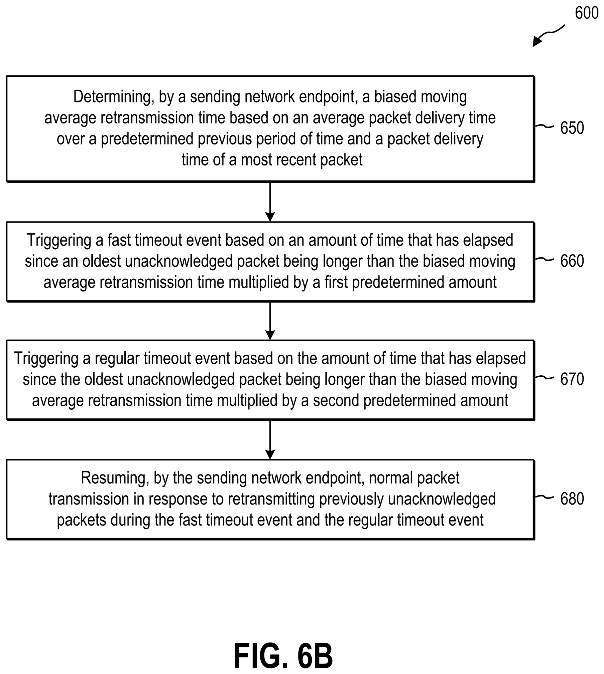

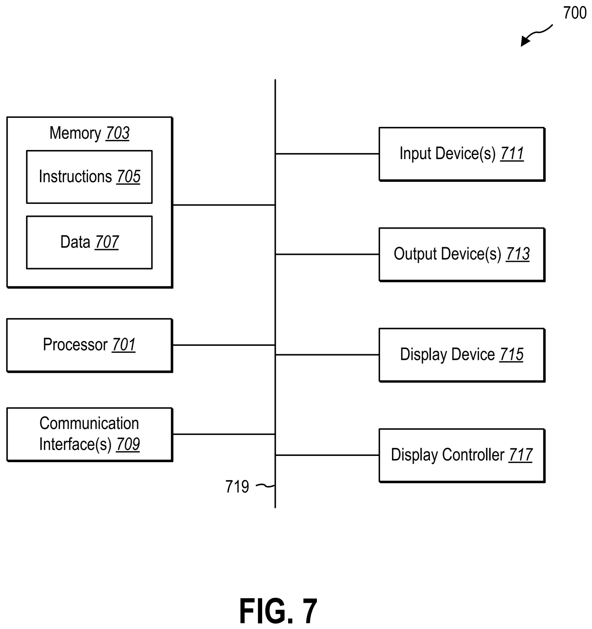

FIGS. 6A and 6B illustrate overviews of steps taken by the adaptive retransmission system in leveraging the biased moving average retransmission time to recover from data packet drops. Finally, FIG. 7 illustrates an overview diagram of a computing system.

As just mentioned, FIG. 1 illustrates an example overview of an environment 100 including instances of an adaptive retransmission system 102 operating in as part of network endpoints 105a, 105b. In the example shown in FIG. 1, the environment 100 further includes a first level of network switches 110a, 110b, and a second level of network switches 112a, 112b, and 112c. In one or more embodiments, each of the network switches 110a, 110b and the network switches 112a-112c can be computing systems that are networked together. Similarly, the sending units 106a, 106b and the receiving units 108a, 108b can be computing nodes that perform calculations and send and receive data packets. As such, the sending units 106a, 106b, the receiving units 108a, 108b, the network switches 110a, 110b, and the network switches 112a-112c can be computational nodes that are networked together within a single communication collective. As such, the sending units 106a, 106b, the receiving units 108a, 108b, the network switches 110a, 110b, and the network switches 112a-112c can pass data and receive data among themselves to perform tasks as part of the collective.

In at least one embodiment, the network endpoints 105a, 105b represent network interface devices that transmit and receive data packets according to one or more protocols. For example, the network endpoints 105a, 105b may be network interface controllers (NICs) that utilize protocols such as Remote Direct Memory Access or RDMA. Such protocols instruct the network endpoints 105a, 105b how to receive and transmit data packets among connected nodes such as the sending units 106a, 106b and the receiving units 108a, 108b.

In one or more embodiments, as shown in FIG. 1, the network endpoints 105a, 105b each include an instance of the adaptive retransmission system 102. For example, the adaptive retransmission system 102 can receive data flow latency measurements from the receiving units 108a, 108b. The adaptive retransmission system 102 can further instruct the sending units 106a, 106b to adaptively retransmit potentially dropped data packets to the receiving units 108a, 108b, respectively by triggering timeout events using the biased moving average retransmission times 104a, 104b.

While FIG. 1 illustrates one arrangement of computing devices, other arrangements are possible. For example, an alternate arrangement may include additional or different network switches and endpoints in any of various arrangements. A common feature of an environment where instances of the adaptive retransmission system 102 operates is that the computing devices within that environment are networked together in a multi-path arrangement such that data packets traveling from one endpoint to another may take different routes to arrive at the same place.

As mentioned above, the adaptive retransmission system 102 adaptively retransmits data packets in an environment where data packets are being sent among nodes out-of-order. FIGS. 2A-2D illustrate additional information with regard to in-order and out-of-order data packet transmission. For example, as shown in a sequence diagram 200 in FIG. 2A, a transmitting node 202 can send data packets 206a, 206b, and 206c to a receiving node 204. Because the transmitting node 202 and the receiving node 204 are operating under an in-order transmission protocol, the arrival of the data packet 206c following the arrival of the data packet 206a at the receiving node 204 implicitly indicates to the receiving node 204 that the data packet 206b is missing.

Thus, as further shown in FIG. 2A, the receiving node 204 can send an acknowledgement 208a of the data packet 206a followed by a non-acknowledgment 210 of the data packet 206b. In response to receiving the non-acknowledgment 210 of the data packet 206b, the transmitting node 202 can retransmit the data packet 206b and the data packet 206c. Upon receiving the data packets 206b and 206c, the receiving node 204 can transmit acknowledgements 208b and 208c of those packets back to the transmitting node 202. In at least one embodiment, the time from sending the first dropped data packet 206a to retransmitting the data packet 206a is close to the round-trip time under the in-order data retransmission scheme shown in FIG. 2A.

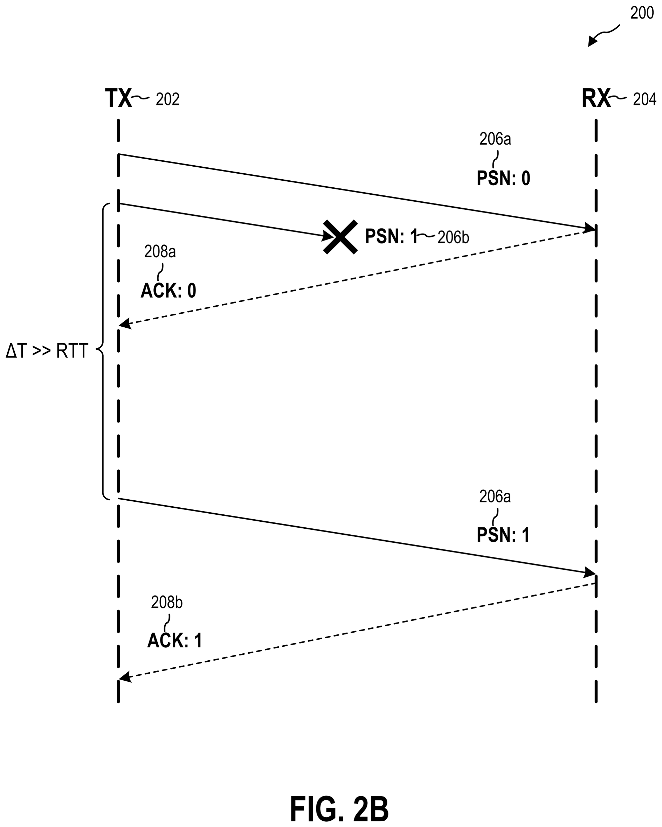

As further illustrated in FIG. 2B, in-order systems also utilize a timeout period in addition to using sequence number when packets are occasionally dropped. For example, following transmission and receipt of the data packet 206a, the transmitting node 202 receives the acknowledgement 208a from the receiving node 204. Following transmission of the data packet 206b, however, the transmitting node 202 does not immediately receive a corresponding acknowledgement. In one or more embodiments, in-order systems will wait for a timeout period (e.g., a "send timeout") prior to retransmitting the data packet 206a. Upon receipt of the acknowledgement 208b, the transmitting node 202 can continue transmitting the next data packet.

Moreover, in some instances, in-order systems can utilize the timeout period to detect missing packets. To illustrate, if the last packet of the flow is missing, the system relies on a timeout period to determine that the last packet is missing. For example, since sequence number cannot be relied on in connection with the last packet in the sequence, such systems utilize a timeout period because no additional acknowledgements are expected from the receiving node 204. While the approaches utilized by in-order systems ensure that any dropped packet is retransmitted, adding multiple send timeouts can dramatically slow overall packet transmission-creating bottlenecks and other latency problems.

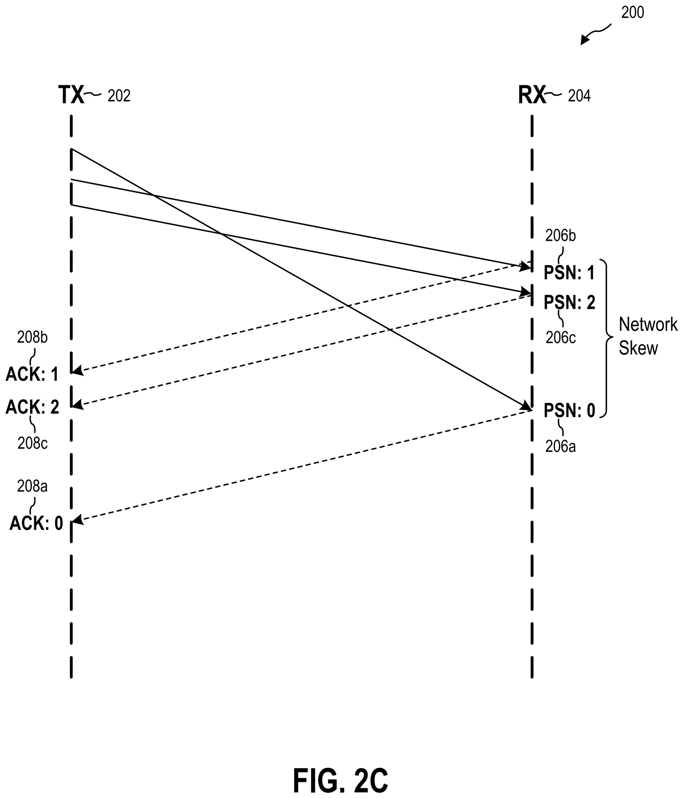

Out-of-order systems allow for greater flexibility in a multi-path environment. For example, out-of-order systems avoid the hash-collisions and associated inefficiencies that exist in multi-tier networks, such as illustrated in FIG. 1. In an out-of-order system, however, fixed timeout periods cannot be used to determine dropped or missed packets as in an in-order system. For example, as shown in FIG. 2C, the transmitting node 202 may transmit the data packets 206a-206c in-order but the receiving node 204 may receive the data packets 206a-206c in a different order than they were sent due to network skew. As shown in FIG. 2C, the receiving node 204 may send acknowledgements 208a-208c immediately upon receiving each of the data packets 206a-206c. Despite this, because the receiving node 204 received the packets 206a-206c out-of-order, the transmitting node 202 receives the acknowledgements 208a-208c out-of-order as well. Thus, the transmitting node 202 in standard out-of-order systems needs to determine how to handle the missing acknowledgement 208a associated with the data packet 206a.

As mentioned above, the transmitting node 202 can retransmit the data packet 206a immediately following the receipt of the acknowledgements 208b. This would be spurious, however, because the data packet 206a is not actually dropped. Alternatively, the transmitting node 202 can wait some period of time prior to retransmitting the data packet 206a. This period of time, however, is difficult to determine as it may be too short to accurately account for network latency.

As mentioned above, the adaptive retransmission system 102 determines, updates, and utilizes the biased moving average retransmission time 104 to trigger a targeted, accurate, and efficient retransmission of data packets. FIGS. 3A and 3B additionally illustrate how the biased moving average retransmission time 104 tracks latency spikes more closely than a typical moving average retransmission time enabling the adaptive retransmission system 102 to trigger data packet transmissions more effectively than previous systems.

For example, FIG. 3A illustrates a graph 300a showing a typical moving average retransmission time 308. In more detail, the graph 300a charts the typical moving average retransmission time 308 over a series of latency samples 304 against network latency 306. For example, the network latency 306 shows how much time it takes a particular sample to travel across the network. An existing system would then calculate the typical moving average retransmission time 308 as an average amount of travel time taken by packets over a specified period of time. As shown by the graph 300a, the typical moving average retransmission time 308 generally tracks a general upward or downward trend of the network latency 306. The typical moving average retransmission time 308 however does little to account for the larger spikes in the network latency 306 which would likely be the greatest source of retransmission problems in an out-of-order retransmission system.

To solve this problem, the adaptive retransmission system 102 utilizes the biased moving average retransmission time 104 to closely track such network latency spikes. For example, as shown in the graph 300b in FIG. 3B and as will be discussed in greater detail below, the adaptive retransmission system 102 determines the biased moving average retransmission time 104 based on a moving average metric (discussed in further detail below) for a predetermined previous period of time, a packet delivery time of a most recent packet, and a high constant or a low constant selected based on a comparison of the average packet delivery time and the packet delivery time of the most recent packet. Because the biased moving average retransmission time 104 closely tracks spikes within the network latency 306, the adaptive retransmission system 102 can more accurately and efficiently retransmit packets within the network experiencing those spikes.

As used herein, a moving average metric may refer to a metric that is used in determining a biased moving average retransmission time (e.g., in combination with a most recent packet delivery time and one of a high constant or low constant). In one or more embodiments, the moving average metric refers to a previously determined biased moving average retransmission time. For example, a moving average metric may refer to a most recent determined biased moving average retransmission time associated with a predetermined period of time (and/or a predetermined number of packet transmissions).

In one or more embodiments, a moving average metric is referred to as a current moving average metric (e.g., in the formula discussed below). In one or more embodiments, the moving average metric may be determined based on a predetermined period of time. However, in one or more embodiments, the moving average metric refer to an initial value or average metric for some number of packets prior to passage of the predetermined period of time. For example, where the adaptive retransmission system 102 is determining an initial value to use as the moving average metric, the moving average metric may be assigned or predetermined prior to a certain number of packets have arrived at a target node. In one or more of the following examples, a moving average metric is referred to as a current biased moving average retransmission time, referring to a most recently calculated biased moving average retransmission time. Nevertheless, the current biased moving average retransmission time may refer to any of the above-examples of the moving average metric.

In more detail, the adaptive retransmission system 102 determines and updates the biased moving average retransmission time 104 by tracking and comparing various metrics on a per-flow basis. For example, the adaptive retransmission system 102 can determine the biased moving average retransmission time 104 according to the following:

$$RTT_{BMA} = \frac{RTT_{new}}{2^{\alpha_{biased}}} + \left(RTT_{BMA_Current} - \frac{RTT_{BMA_Current}}{2^{\alpha_{biased}}}\right)$$

$$if\ RTT_{new} < RTT_{BMA_Current}: \alpha_{biased} = \alpha_{low}$$

$$else: \alpha_{biased} = \alpha_{high}$$

Where $RTT_{new}$ is a packet delivery time of a most recent packet, $RTT_{BMA_Current}$ is a current (or most recently calculated) biased moving average retransmission time (e.g., a moving average metric), and $\alpha_{biased}$ is either the high constant (e.g., $\alpha_{high}$) or the low constant (e.g., $\alpha_{low}$), where the high or low constant is determined based on a comparison of the packet delivery time of a most recent packet and the current biased moving average metric.

As such, the adaptive retransmission system 102 selects whether to use the high constant (e.g., $\alpha_{high}$) or the low constant (e.g., $\alpha_{low}$) based on a comparison of the packet delivery time of a most recent packet (e.g., $RTT_{new}$)and the current biased moving average retransmission time 104. If the packet delivery time of the most recent packet is smaller than the biased moving average retransmission time 104, the adaptive retransmission system 102 selects the low constant. In at least one embodiment, the adaptive retransmission system 102 sets the low constant to a default value of four.

If the packet delivery time of the most recent packet is greater than or equal to the biased moving average retransmission time 104, the adaptive retransmission system 102 selects the high constant. In at least one embodiment, the adaptive retransmission system 102 sets the high constant to a default value of zero. In one or more embodiments, the adaptive retransmission system 102 can cap the biased moving average retransmission time 104 such that it does not go beyond a configurable, predetermined value.

Accordingly, the adaptive retransmission system 102 generates and updates the biased moving average retransmission time 104 such that it closely tracks the latency peaks shown in the graph 300b in FIG. 3B. For example, by setting the low constant to 4 and the high constant to 2 (e.g., by default), the adaptive retransmission system 102 ensure that when a new packet delivery time ($RTT_{new}$) is lower than the current biased moving average retransmission time 104, the biased moving average retransmission time 104 is only pulled down with a small value. When the new packet delivery time ($RTT_{new}$) is higher than the current biased moving average retransmission time 104, the biased moving average retransmission time 104 is pulled up with a large value. As such, the biased moving average retransmission time 104 is "biased" toward the higher packet delivery time in order to capture latency spikes. Thus, by utilizing the biased moving average retransmission time 104 the adaptive retransmission system 102 can quickly react to latency peaks when determining whether or not to retransmit one or more packets.

In one or more embodiments, the adaptive retransmission system 102 utilizes the biased moving average retransmission time 104 to trigger two types of timeout events. For example, the adaptive retransmission system 102 can trigger a fast timeout event and/or a regular timeout event based on the biased moving average retransmission time 104. In one or more embodiments, the adaptive retransmission system 102 triggers a fast timeout event when an amount of time that has elapsed since an oldest unacknowledged data packet is greater than the biased moving average retransmission time 104 multiplied by a fast timeout constant. In one or more embodiments, the adaptive retransmission system 102 sets the fast timeout constant to a default value of two. In response to triggering the fast timeout event, the adaptive retransmission system 102 retransmits only the oldest unacknowledged data packet.

In one or more embodiments, the adaptive retransmission system 102 triggers a regular timeout event when an amount of time since any unacknowledged packet was sent is greater than the biased moving average retransmission time 104 multiplied by a regular timeout constant. For example, the adaptive retransmission system 102 can set the regular timeout constant to ten. In response to triggering the regular timeout event, the adaptive retransmission system 102 retransmits all unacknowledged packets.

To further illustrate how the adaptive retransmission system 102 triggers each of the fast timeout event and the regular timeout event, FIG. 4 shows a chart 400 of data packets that have been dropped during a communication collective. For example, a series 402 of packets may be dropped during a 100μs window 404. Utilizing the biased moving average retransmission time 104 (e.g., the biased moving average retransmission time 104 equals 16 in this example), the adaptive retransmission system 102 can trigger a fast timeout event 406 once 32μs (e.g., biased moving average retransmission time 104 multiplied by the fast timeout constant) have elapsed.

During the fast timeout event 406, the adaptive retransmission system 102 attempts to retransmit an oldest unacknowledged data packet 403a. The adaptive retransmission system 102 continues to attempt retransmission of the oldest unacknowledged data packet 403a every 32μs during the fast timeout event 406. Once the window 404 closes, the adaptive retransmission system 102 successfully retransmits the oldest unacknowledged data packet 403a and then attempts to retransmit the next oldest unacknowledged data packet 403b, and then the next oldest unacknowledged data packet 403c, and so forth.

Once an amount of time has elapsed since an unacknowledged packet that is greater than the biased moving average retransmission time 104 multiplied by the regular timeout constant (e.g., 160μs in this example), the adaptive retransmission system 102 can trigger a regular timeout event 408. As shown in the chart 400, the adaptive retransmission system 102 can retransmit all previously unacknowledged packets during the regular timeout event 408.

As mentioned above, the adaptive retransmission system 102 utilizes the biased moving average retransmission time 104 to improve performance and robustness of packet transport protocols under dynamic network conditions and multipathing environments. FIG. 5 is a block diagram 500 of the adaptive retransmission system 102 operating within one or more memories of the network endpoint 105 while data packets are transmitted and received among the sending unit 106 and the receiving unit 108. As such, FIG. 5 provides additional detail with regard to these functions. For example, as shown in FIG. 5, the adaptive retransmission system 102 can include a communication manager 502, a biased moving average manager 504, a fast timeout event manager 506, and a regular timeout event manager 508-in addition to the biased moving average retransmission time 104.

In certain implementations, the adaptive retransmission system 102 may represent one or more software applications, modules, or programs that, when executed by a computing device, may cause the computing device to perform one or more tasks. For example, and as will be described in greater detail below, one or more of the communication manager 502, the biased moving average manager 504, the fast timeout event manager 506, or the regular timeout event manager 508 may represent software stored and configured to run on one or more computing devices. Similarly, one or more of the communication manager 502, the biased moving average manager 504, the fast timeout event manager 506, or the regular timeout event manager 508 may represent software stored and configured to run on one or more computing devices, such as the network endpoint 105. Any of the communication manager 502, the biased moving average manager 504, the fast timeout event manager 506, and/or the regular timeout event manager 508 in FIG. 5 may also represent all or portions of one or more special purpose computers to perform one or more operations.

As mentioned above, and as shown in FIG. 5, the adaptive retransmission system 102 includes the communication manager 502. In one or more embodiments, the communication manager 502 receives latency information (e.g., packet delivery times) from the receiving unit 108. Additionally, the communication manager 502 instructs the sending unit 106 to retransmit certain packets or series of packets based on triggered timeout events.

In more detail, the communication manager 502 also reads and records timestamp information associated with data packets. For example, the communication manager 502 can record a timestamp for when a data packet is received by the receiving unit 108. The communication manager 502 can further record a timestamp for when that data packet is transmitted by the sending unit 106.

Additionally, the communication manager 502 can receive and track acknowledgement messages associated with data packet transmissions. For example, in one or more embodiments, the communication manager 502 can receive and track an acknowledgement message received by the sending unit 106 for each data packet that the sending unit 106 sends to the receiving unit 108. As such, the communication manager 502 can track and record each data packet transmission and its associated acknowledgement message. The communication manager 502 can further associate timestamps with each transmission and receipt. In at least one embodiment, as will be discussed further below, other components of the adaptive retransmission system 102 can use this timestamp information to determine and update the biased moving average retransmission time 104 as well as trigger timeout events.

As mentioned above, and as shown in FIG. 5, the adaptive retransmission system 102 includes the biased moving average manager 504. In one or more embodiments, the biased moving average manager 504 generates, updates, and maintains the biased moving average retransmission time 104. For example, as discussed above, the biased moving average manager 504 generates the biased moving average retransmission time 104 according to:

$$RTT_{BMA} = \frac{RTT_{new}}{2^{\alpha_{biased}}} + \left(RTT_{BMA_Current} - \frac{RTT_{BMA_Current}}{2^{\alpha_{biased}}}\right)$$

$$if\ RTT_{new} < RTT_{BMA_Current}: \alpha_{biased} = \alpha_{low}$$

$$else: \alpha_{biased} = \alpha_{high}$$

Where $RTT_{new}$ is a packet delivery time of a most recent packet, $RTT_{BMA}$ is the biased moving average retransmission time 104, and $\alpha_{biased}$ is either the high constant (e.g., $\alpha_{high}$; default value = 0) or the low constant (e.g., $\alpha_{low}$; default value = 4), which is based on a comparison of the recent packet delivery time and the current biased moving average retransmission time.

As such, the biased moving average manager 504 can initially generate the biased moving average retransmission time 104 (e.g., $RTT_{BMA_Current}$) upon the communication manager 502 receiving a first acknowledgement message from the receiving unit 108a indicating how long it took for the receiving unit 108 to receive the associated data packet. The biased moving average manager 504 can use this amount of time as $RTT_{new}$. The biased moving average manager 504 can further set $\alpha_{biased}$ = 4 for this first determination of the biased moving average retransmission time 104.

Following this initial determination of the biased moving average retransmission time 104, the biased moving average manager 504 can update the biased moving average retransmission time 104 each time a new acknowledgement message is received by the communication manager 502 indicating a new delivery time for a data packet. Alternatively, the biased moving average manager 504 can update the biased moving average retransmission time 104 after a threshold number of acknowledgement messages (e.g., after every 100 acknowledgement messages).

In at least one embodiment, the biased moving average manager 504 caps the biased moving average retransmission time 104 to not go beyond a certain configurable value. For example, the biased moving average manager 504 can cap the biased moving average retransmission time 104 such that the biased moving average retransmission time 104 does not go too high following a consistent series of very high latency peaks.

Moreover, the biased moving average manager 504 also stores the biased moving average retransmission time 104. In at least one embodiment, the biased moving average manager 504 stores the biased moving average retransmission time 104 in a dedicated hardware register within the network endpoint 105. For example, by storing the biased moving average retransmission time 104 in a dedicated register and by restricting the biased moving average retransmission time 104 to whole numbers, the biased moving average manager 504 can quickly and easily update and utilize the biased moving average retransmission time 104 as part of a lightweight determination mechanism.

As mentioned above, and as shown in FIG. 5, the adaptive retransmission system 102 includes the fast timeout event manager 506. In one or more embodiments, the fast timeout event manager 506 determines whether to trigger a fast timeout event based on per-packet timestamps collected by the communication manager 502. For example, the fast timeout event manager 506 can react quickly to potentially dropped packets by triggering a fast timeout event when the biased moving average retransmission time 104 multiplied by a fast timeout constant (e.g., 2) has elapsed since an oldest unacknowledged data packet was sent but still not acknowledged.

In response to triggering a fast timeout event, the fast timeout event manager 506 can retransmit the oldest unacknowledged packet to a receiving unit (e.g., the receiving unit 108). In at least one embodiment, the fast timeout event manager 506 retransmits this packet if there is no retransmission already in-flight. This ensures that the adaptive retransmission system 102 retransmits oldest unacknowledged packet quickly during what is likely a latency critical phase.

As mentioned above, and as shown in FIG. 5, the adaptive retransmission system 102 includes the regular timeout event manager 508. In one or more embodiments, the regular timeout event manager 508 determines whether to trigger a regular timeout event based on per-packet timestamps collected by the communication manager 502. For example, the regular timeout event manager 508 ensures throughput during the still-critical transmission phase by essentially sliding the out-of-order window forward in time. To illustrate, the regular timeout event manager 508 can trigger a regular timeout event when the biased moving average retransmission time 104 multiplied by a regular timeout constant (e.g., 10) has elapsed since any packet has been sent but not acknowledged.

In response to triggering a regular timeout event, the regular timeout event manager 508 can retransmit all unacknowledged packets. In at least one embodiment, the regular timeout event manager 508 retransmits these packets if there is no retransmission already in-flight. Additionally, the regular timeout event manager 508 can support exponential back-off if regular retry attempts exceed a predetermined threshold.

In one or more embodiments, the network endpoint 105 can include one or more memories. For example, the one or more memories can generally represent any type or form of volatile or non-volatile storage device or medium capable of storing data and/or computer-readable instructions. In one example, the one or more memories may store, load, and/or maintain one or more components of the adaptive retransmission system 102. Examples of the one or more memories can include, without limitation, Random Access Memory (RAM), Read Only Memory (ROM), flash memory, Hard Disk Drives (HDDs), Solid-State Drives (SSDs), optical disk drives, caches, variations, or combinations of one or more of the same, and/or any other suitable storage memory.

Moreover, in one or more embodiments, the network endpoint 105 can include one or more physical processors. The one or more processor(s) generally represent any type or form of hardware-implemented processing units capable of interpreting and/or executing computer-readable instructions. In one implementation, the one or more physical processors may access and/or modify one or more components of the adaptive retransmission system 102. Examples of the one or more physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, and/or any other suitable physical processor.

As discussed above, the adaptive retransmission system 102 lowers the risk of retransmission flooding and congestion collapse within networked environments by leveraging the biased moving average retransmission time 104 to efficiently and accurately retransmit data packets. FIGS. 6A and 6B illustrate an example series of acts for determining and utilizing the biased moving average retransmission time 104 to retransmit data packets. While FIGS. 6A and 6B illustrate acts according to one or more embodiments, alternative embodiments may omit, add to, reorder, and/or modify any of the acts shown in FIGS. 6A and 6B. The acts of FIGS. 6A and 6B can be performed as part of a method. Alternatively, a non-transitory computer-readable medium can include instructions that, when executed by one or more processors, cause a computing device to perform the acts of FIGS. 6A and 6B. In still further embodiments, a system can perform the acts of FIGS. 6A and 6B.

In one or more embodiments, FIG. 6A illustrates a series of acts 600a for retransmitting data packets during a fast timeout event. As illustrated in FIG. 6A, the series of acts 600a includes an act 610 of determining a biased moving average transmission time. For example, the act 610 can include determining, by a network endpoint, a biased moving average retransmission time based on an average packet delivery time over a predetermined previous period of time, a packet delivery time of a most recent packet, and a high constant or a low constant selected based on a comparison of the average packet delivery time and the packet delivery time of the most recent packet.

In one or more embodiments, the series of acts 600a can include acts of receiving an acknowledgement for a previously sent packet, and updating the biased moving average retransmission time based on the acknowledgement for the previously sent packet. For example, updating the biased moving average retransmission time based on the acknowledgement for the previously sent packet can include comparing the acknowledgment for the previously sent packet against the biased moving average retransmission time, if the acknowledgment for the previously sent packet indicates a transmission time less than the biased moving average retransmission time, updating the biased moving average retransmission time based on the previously sent packet and the low constant, and if the acknowledgment for the previously sent packet indicates a transmission time greater or equal to the biased moving average retransmission time, updating the biased moving average retransmission time based on the previously sent packet and the high constant.

In some embodiments, the series of acts 600a can include an act of storing the biased moving average retransmission time in a register on the network endpoint. For example, in some embodiments, the network endpoint stores the biased moving average retransmission time for a single network connection.

Additionally, as illustrated in FIG. 6A, the series of acts 600a includes an act 620 of triggering a fast timeout event based on an amount of time that has elapsed since an oldest unacknowledged packet was sent in relation to the biased moving average retransmission time. For example, triggering the fast timeout event based on the amount of time that has elapsed since the oldest unacknowledged packet was sent in relation to the biased moving average retransmission time can include comparing the amount of time that has elapsed since the oldest unacknowledged packet was sent to the biased moving average retransmission time multiplied by a predetermined amount, and triggering the fast timeout event in response to the amount of time that has elapsed since the oldest unacknowledged packet was sent being longer than the biased moving average retransmission time multiplied by the predetermined amount. Additionally, in at least one embodiment, the predetermined amount of doubles the biased moving average retransmission time.

As further illustrated in FIG. 6A, the series of acts 600a includes an act 630 of, during the fast timeout event, retransmitting the oldest unacknowledged packet, receiving an acknowledgment of the oldest unacknowledged packet, and retransmitting a next-oldest unacknowledged packet.

Finally, as illustrated in FIG. 6A, the series of acts 600a includes an act 640 of resuming, by the network endpoint, normal packet transmission in response to retransmitting previously unacknowledged packets during the fast timeout event.

In one or more embodiments, FIG. 6B illustrates a series of acts 600b for retransmitting data packets during both a fast timeout event and a regular timeout event. As illustrated in FIG. 6B, the series of acts 600b includes an act 650 of determining, by a network endpoint, a biased moving average retransmission time based on an average packet delivery time over a predetermined previous period of time and a packet delivery time of a most recent packet.

For example, determining the biased moving average retransmission time based on the average packet delivery time over the predetermined previous period of time and the packet delivery time of a most recent packet can include comparing the packet delivery time of the most recent packet against the average packet delivery time over the predetermined previous period of time, if the packet delivery time of the most recent packet is less than the average packet delivery time over the predetermined previous period of time, determining the biased moving average retransmission time based on the average packet delivery time over the predetermined previous period of time, the packet delivery time of a most recent packet, and a low constant, and if the packet delivery time of the most recent packet is greater than or equal to the average packet delivery time over the predetermined previous period of time, determining the biased moving average retransmission time based on the average packet delivery time over the predetermined previous period of time, the packet delivery time of a most recent packet, and a high constant. In at least one embodiment, the low constant is four and the high constant is zero.

Additionally, as shown in FIG. 6B, the series of acts 600b includes an act 660 of triggering a fast timeout event based on an amount of time that has elapsed since an oldest unacknowledged packet being longer than the biased moving average retransmission time multiplied by a first predetermined amount.

As further shown in FIG. 6B, the series of acts 600b includes an act 670 of triggering a regular timeout event based on the amount of time that has elapsed since the oldest unacknowledged packet being longer than the biased moving average retransmission time multiplied by a second predetermined amount. For example, triggering the regular timeout event based on the amount of time that has elapsed since the oldest unacknowledged packet being longer than the biased moving average retransmission time multiplied by a second predetermined amount can include retransmitting all unacknowledged packets. In at least one embodiment, the second predetermined amount multiplies the biased moving average retransmission time by ten.

Finally, as further shown in FIG. 6B, the series of acts 600b includes an act 680 of resuming, by the network endpoint, normal packet transmission in response to retransmitting previously unacknowledged packets during the fast timeout event and the regular timeout event. In at least one embodiment, the series of acts 600b further includes capping the biased moving average retransmission time at a preconfigured value.

FIG. 7 illustrates certain components that may be included within a computer system 700. One or more computer systems 700 may be used to implement the various devices, components, and systems described herein.

The computer system 700 includes a processor 701. The processor 701 may be a general-purpose single- or multi-chip microprocessor (e.g., an Advanced RISC (Reduced Instruction Set Computer) Machine (ARM)), a special purpose microprocessor (e.g., a digital signal processor (DSP)), a microcontroller, a programmable gate array, etc. The processor 701 may be referred to as a central processing unit (CPU). Although just a single processor 701 is shown in the computer system 700 of FIG. 7 in an alternative configuration, a combination of processors (e.g., an ARM and DSP) could be used.

The computer system 700 also includes memory 703 in electronic communication with the processor 701. The memory 703 may be any electronic component capable of storing electronic information. For example, the memory 703 may be embodied as random-access memory (RAM), read-only memory (ROM), magnetic disk storage media, optical storage media, flash memory devices in RAM, on-board memory included with the processor, erasable programmable read-only memory (EPROM), electrically erasable programmable read-only memory (EEPROM), registers, and so forth, including combinations thereof.

Instructions 705 and data 707 may be stored in the memory 703. The instructions 705 may be executable by the processor 701 to implement some or all of the functionality disclosed herein. Executing the instructions 705 may involve the use of the data 707 that is stored in the memory 703. Any of the various examples of modules and components described herein may be implemented, partially or wholly, as instructions 705 stored in memory 703 and executed by the processor 701. Any of the various examples of data described herein may be among the data 707 that is stored in memory 703 and used during execution of the instructions 705 by the processor 701.

A computer system 700 may also include one or more communication interfaces 709 for communicating with other electronic devices. The communication interface(s) 709 may be based on wired communication technology, wireless communication technology, or both. Some examples of communication interfaces 709 include a Universal Serial Bus (USB), an Ethernet adapter, a wireless adapter that operates in accordance with an Institute of Electrical and Electronics Engineers (IEEE) 802.11 wireless communication protocol, a Bluetooth® wireless communication adapter, and an infrared (IR) communication port.

A computer system 700 may also include one or more input devices 711 and one or more output devices 713. Some examples of input devices 711 include a keyboard, mouse, microphone, remote control device, button, joystick, trackball, touchpad, and lightpen. Some examples of output devices 713 include a speaker and a printer. One specific type of output device that is typically included in a computer system 700 is a display device 715. Display devices 715 used with embodiments disclosed herein may utilize any suitable image projection technology, such as liquid crystal display (LCD), light-emitting diode (LED), gas plasma, electroluminescence, or the like. A display controller 717 may also be provided, for converting data 707 stored in the memory 703 into text, graphics, and/or moving images (as appropriate) shown on the display device 715.

The various components of the computer system 700 may be coupled together by one or more buses, which may include a power bus, a control signal bus, a status signal bus, a data bus, etc. For the sake of clarity, the various buses are illustrated in FIG. 7 as a bus system 719.

The techniques described herein may be implemented in hardware, software, firmware, or any combination thereof, unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium comprising instructions that, when executed by at least one processor, perform one or more of the methods described herein. The instructions may be organized into routines, programs, objects, components, data structures, etc., which may perform particular tasks and/or implement particular data types, and which may be combined or distributed as desired in various embodiments.

Described herein are systems and methods for adaptively retransmitting data packets utilizing a biased moving average retransmission time. Systems and methods described herein avoid the risks of retransmission flooding and congestion collapse common to existing out-of-order packet transmission systems by generating, updating, and utilizing a biased moving average retransmission time that adapts to a specific latency of a data flow. By tailoring fast and regular timeout events to this biased moving average retransmission time, the systems and methods described herein can dynamically adapt to in-the-moment network conditions to ensure that data packets reach their intended endpoints.

Alternatively or in addition to the other examples described herein, examples include any combination of the following:

Clause A. A network transfer method for sending network packets while quickly adjusting to network conditions and avoiding spurious retransmissions comprising: determining, by a network endpoint, a biased moving average retransmission time based on a moving average metric, a packet delivery time of a most recent packet, and a high constant or a low constant selected based on a comparison of the moving average metric and the packet delivery time of the most recent packet; triggering a fast timeout event based on an amount of time that has elapsed since an oldest unacknowledged packet was sent in relation to the biased moving average retransmission time; during the fast timeout event: retransmitting the oldest unacknowledged packet; receiving an acknowledgment of the oldest unacknowledged packet; and retransmitting a next-oldest unacknowledged packet; and resuming, by the network endpoint, normal packet transmission in response to retransmitting previously unacknowledged packets during the fast timeout event.

Clause B. The network transfer method as recited in clause A, further comprising: receiving an acknowledgement for a previously sent packet; and updating the biased moving average retransmission time based on the acknowledgement for the previously sent packet.

Clause C. The network transfer method as recited in clause B, wherein updating the biased moving average retransmission time based on the acknowledgement for the previously sent packet comprises: comparing the acknowledgment for the previously sent packet against the biased moving average retransmission time; if the acknowledgment for the previously sent packet indicates a transmission time less than the biased moving average retransmission time, updating the biased moving average retransmission time based on the previously sent packet and the low constant; and if the acknowledgment for the previously sent packet indicates a transmission time greater or equal to the biased moving average retransmission time, updating the biased moving average retransmission time based on the previously sent packet and the high constant.

Clause D. The network transfer method as recited in clause A, further comprising storing the biased moving average retransmission time in a register on the network endpoint.

Clause E. The network transfer method as recited in clause D, wherein the network endpoint stores the biased moving average retransmission time for a single network connection.

Clause F. The network transfer method as recited in clause A, wherein triggering the fast timeout event based on the amount of time that has elapsed since the oldest unacknowledged packet was sent in relation to the biased moving average retransmission time comprises: comparing the amount of time that has elapsed since the oldest unacknowledged packet was sent to the biased moving average retransmission time multiplied by a predetermined amount; and triggering the fast timeout event in response to the amount of time that has elapsed since the oldest unacknowledged packet was sent being longer than the biased moving average retransmission time multiplied by the predetermined amount.

Clause G. The network transfer method as recited in clause F, wherein the predetermined amount is double the biased moving average retransmission time.

Clause H. A network transfer method for sending network packets while quickly adjusting to network conditions and avoiding spurious retransmissions comprising: determining, by a network endpoint, a biased moving average retransmission time based on a moving average metric and a packet delivery time of a most recent packet; triggering a fast timeout event based on an amount of time that has elapsed since an oldest unacknowledged packet being longer than the biased moving average retransmission time multiplied by a first predetermined amount; triggering a regular timeout event based on the amount of time that has elapsed since the oldest unacknowledged packet being longer than the biased moving average retransmission time multiplied by a second predetermined amount; and resuming, by the network endpoint, normal packet transmission in response to retransmitting previously unacknowledged packets during the fast timeout event and the regular timeout event.

Clause I. The network transfer method as recited in clause H, wherein determining the biased moving average retransmission time based on the moving average metric and the packet delivery time of a most recent packet comprises: comparing the packet delivery time of the most recent packet against the moving average metric over a predetermined previous period of time; if the packet delivery time of the most recent packet is less than the moving average metric over the predetermined previous period of time, determining the biased moving average retransmission time based on the moving average metric over the predetermined previous period of time, the packet delivery time of a most recent packet, and a low constant; and if the packet delivery time of the most recent packet is greater than or equal to the moving average metric over the predetermined previous period of time, determining the biased moving average retransmission time based on the moving average metric over the predetermined previous period of time, the packet delivery time of a most recent packet, and a high constant.

Clause J. The network transfer method as recited in clause I, wherein: the low constant is four; and the high constant is zero.

Clause K. The network transfer method as recited in clause H, wherein triggering the regular timeout event based on the amount of time that has elapsed since the oldest unacknowledged packet being longer than the biased moving average retransmission time multiplied by a second predetermined amount comprises retransmitting all unacknowledged packets.

Clause L. The network transfer method as recited in clause I, wherein the second predetermined amount multiplies the biased moving average retransmission time by ten.

Clause M. The network transfer method as recited in clause H, further comprising capping the biased moving average retransmission time at a preconfigured value.

Clause N. A system comprising: at least one processor; memory in electronic communication with the at least one processor; and instructions stored in memory, the instructions being executable by the at least one processor to: determine a biased moving average retransmission time based on a moving average metric, a packet delivery time of a most recent packet, and a high constant or a low constant selected based on a comparison of the moving average metric and the packet delivery time of the most recent packet; trigger a fast timeout event based on an amount of time that has elapsed since an oldest unacknowledged packet was sent exceeding the biased moving average retransmission time multiplied by a first predetermined amount; and during the fast timeout event: retransmit the oldest unacknowledged packet; receive an acknowledgment of the oldest unacknowledged packet; and retransmit a next-oldest unacknowledged packet.

Clause O. The system as recited in clause N, further storing instructions in memory that are executable by the at least one processor to trigger a regular timeout event based on the amount of time that has elapsed since the oldest unacknowledged packet being longer than the biased moving average retransmission time multiplied by a second predetermined amount.

Clause P. The system as recited in clause O, further storing instructions in memory that are executable by the at least one processor to, in response to triggering the regular timeout event, retransmit all unacknowledged packets.

Clause Q. The system as recited in clause N, further storing instructions in memory that are executable by the at least one processor to: receive an acknowledgement for a previously sent packet; and update the biased moving average retransmission time based on the acknowledgement for the previously sent packet.

Clause R. The system as recited in clause Q, further storing instructions in memory that are executable by the at least one processor to update the biased moving average retransmission time based on the acknowledgement for the previously sent packet by: comparing the acknowledgment for the previously sent packet against the biased moving average retransmission time; if the acknowledgment for the previously sent packet indicates a transmission time less than the biased moving average retransmission time, updating the biased moving average retransmission time based on the previously sent packet and the low constant; and if the acknowledgment for the previously sent packet indicates a transmission time greater or equal to the biased moving average retransmission time, updating the biased moving average retransmission time based on the previously sent packet and the high constant.

Clause S. The system as recited in clause R, wherein: the low constant is four; and the high constant is zero.

Clause T. The system as recited in clause N, wherein: the first predetermined amount is two or more times the biased moving average retransmission time; and the second predetermined amount is ten or more times the biased moving average retransmission time.

The steps and/or actions of the methods described herein may be interchanged with one another without departing from the scope of the claims. In other words, unless a specific order of steps or actions is required for proper operation of the method that is being described, the order and/or use of specific steps and/or actions may be modified without departing from the scope of the claims.

The term "determining" encompasses a wide variety of actions and, therefore, "determining" can include calculating, computing, processing, deriving, investigating, looking up (e.g., looking up in a table, a database, or another data structure), ascertaining and the like. Also, "determining" can include receiving (e.g., receiving information), accessing (e.g., accessing data in a memory) and the like. Also, "determining" can include resolving, selecting, choosing, establishing and the like.

The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. For example, any element or feature described in relation to an embodiment herein may be combinable with any element or feature of any other embodiment described herein, where compatible.

The present disclosure may be embodied in other specific forms without departing from its spirit or characteristics. The described embodiments are to be considered as illustrative and not restrictive. The scope of the disclosure is, therefore, indicated by the appended claims rather than by the foregoing description. Changes that come within the meaning and range of equivalency of the claims are to be embraced within their scope.

## Claims

1. A network transfer method for sending network packets while quickly adjusting to network conditions and avoiding spurious retransmissions comprising:

   determining, by a network endpoint (105a), a biased moving average retransmission time (104a) based on a moving average metric, a packet delivery time of a most recent packet, and a high constant or a low constant selected based on a comparison of the moving average metric and the packet delivery time of the most recent packet;
   triggering a fast timeout event (406) based on an amount of time that has elapsed since an oldest unacknowledged packet (403a) was sent in relation to the biased moving average retransmission time (104a);
   during the fast timeout event (406):

      retransmitting the oldest unacknowledged packet (403a);
      receiving an acknowledgment of the oldest unacknowledged packet (403a); and
      retransmitting a next-oldest unacknowledged packet (403b); and

   resuming, by the network endpoint (105a), normal packet transmission in response to retransmitting previously unacknowledged packets during the fast timeout event (406).

2. The network transfer method as recited in claim 1, further comprising:

   receiving an acknowledgement for a previously sent packet; and
   updating the biased moving average retransmission time based on the acknowledgement for the previously sent packet.

3. The network transfer method as recited in claim 2, wherein updating the biased moving average retransmission time based on the acknowledgement for the previously sent packet comprises:

   comparing the acknowledgment for the previously sent packet against the biased moving average retransmission time;
   if the acknowledgment for the previously sent packet indicates a transmission time less than the biased moving average retransmission time, updating the biased moving average retransmission time based on the previously sent packet and the low constant; and
   if the acknowledgment for the previously sent packet indicates a transmission time greater or equal to the biased moving average retransmission time, updating the biased moving average retransmission time based on the previously sent packet and the high constant.

4. The network transfer method as recited in claim 1, further comprising storing the biased moving average retransmission time in a register on the network endpoint.

5. The network transfer method as recited in claim 4, wherein the network endpoint stores the biased moving average retransmission time for a single network connection.

6. The network transfer method as recited in claim 1, wherein triggering the fast timeout event based on the amount of time that has elapsed since the oldest unacknowledged packet was sent in relation to the biased moving average retransmission time comprises:

   comparing the amount of time that has elapsed since the oldest unacknowledged packet was sent to the biased moving average retransmission time multiplied by a predetermined amount; and
   triggering the fast timeout event in response to the amount of time that has elapsed since the oldest unacknowledged packet was sent being longer than the biased moving average retransmission time multiplied by the predetermined amount.

7. The network transfer method as recited in claim 6, wherein the predetermined amount is double the biased moving average retransmission time.

8. A network transfer method for sending network packets while quickly adjusting to network conditions and avoiding spurious retransmissions comprising:

determining, by a network endpoint (105a), a biased moving average retransmission time (104a) based on a moving average metric and a packet delivery time of a most recent packet;
triggering a fast timeout event (406) based on an amount of time that has elapsed since an oldest unacknowledged packet (403a) being longer than the biased moving average retransmission time (104a) multiplied by a first predetermined amount;

triggering a regular timeout event (408) based on the amount of time that has elapsed since the oldest unacknowledged packet (403a) being longer than the biased moving average retransmission time (104a) multiplied by a second predetermined amount; and
resuming, by the network endpoint (105a), normal packet transmission in response to retransmitting previously unacknowledged packets during the fast timeout event (406) and the regular timeout event (408).

**9.** The network transfer method as recited in claim 8, wherein determining the biased moving average retransmission time based on the moving average metric and the packet delivery time of a most recent packet comprises:

comparing the packet delivery time of the most recent packet against the moving average metric over a predetermined previous period of time;
if the packet delivery time of the most recent packet is less than the moving average metric over the predetermined previous period of time, determining the biased moving average retransmission time based on the moving average metric over the predetermined previous period of time, the packet delivery time of a most recent packet, and a low constant; and
if the packet delivery time of the most recent packet is greater than or equal to the moving average metric over the predetermined previous period of time, determining the biased moving average retransmission time based on the moving average metric over the predetermined previous period of time, the packet delivery time of a most recent packet, and a high constant.

**10.** The network transfer method as recited in claim 9, wherein:

the low constant is four; and
the high constant is zero.

**11.** The network transfer method as recited in claim 8, wherein triggering the regular timeout event based on the amount of time that has elapsed since the oldest unacknowledged packet being longer than the biased moving average retransmission time multiplied by a second predetermined amount comprises retransmitting all unacknowledged packets.

**12.** The network transfer method as recited in claim 9, wherein the second predetermined amount multiplies the biased moving average retransmission time by ten.

**13.** The network transfer method as recited in claim 8, further comprising capping the biased moving average retransmission time at a preconfigured value.

**14.** A system comprising:

at least one processor (701);
memory (703) in electronic communication with the at least one processor (701); and
instructions (705) stored in memory (703), the instructions (705) being executable by the at least one processor (701) to:

determine a biased moving average retransmission time (104a) based on a moving average metric, a packet delivery time of a most recent packet, and a high constant or a low constant selected based on a comparison of the moving average metric and the packet delivery time of the most recent packet;
trigger a fast timeout event (406) based on an amount of time that has elapsed since an oldest unacknowledged packet (403a) was sent exceeding the biased moving average retransmission time (104a) multiplied by a first predetermined amount; and
during the fast timeout event (406):

retransmit the oldest unacknowledged packet (403a);
receive an acknowledgment of the oldest unacknowledged packet (403a); and
retransmit a next-oldest unacknowledged packet (403b).

**15.** The system as recited in claim 14, further storing instructions in memory that are executable by the at least one processor to trigger a regular timeout event based on the amount of time that has elapsed since the oldest unacknowledged packet being longer than the biased moving average retransmission time multiplied by a second predetermined amount.

100
$T_1$
112a
$T_1$
112b
$T_1$
112c
$T_0$
110a
$T_0$
110b
Network Endpoint 105a
Adaptive Retransmission System 102a
Biased Moving Average Retransmission Time 104a
Sending Unit 106a
Receiving Unit 108a
Network Endpoint 105b
Adaptive Retransmission System 102b
Biased Moving Average Retransmission Time 104b
Sending Unit 106b
Receiving Unit 108b

FIG. 1

200
TX 202
RX 204
206a
PSN: 0
PSN: 1 206b
PSN: 2 206c
ACK: 0 208a
ΔT = RTT
NACK: 1 210
206b
PSN: 1
206c PSN: 2
208b
ACK: 1
ACK: 2 208c

FIG. 2A

200
TX
202
RX
204
206a
PSN: 0
PSN: 1
206b
208a
ACK: 0
ΔT >> RTT
206a
PSN: 1
208b
ACK: 1

FIG. 2B

200
TX
202
RX
204
206b
PSN: 1
PSN: 2
206c
Network
Skew
208b
ACK: 1
ACK: 2
208c
PSN: 0
206a
208a
ACK: 0

FIG. 2C

300a
Moving Average RTT Over Time
Time (Cycles) 302
5000
4000
3000
2000
1000
0
1
11
21
31
41
51
61
71
81
91
101
111
121
131
141
151
161
171
181
191
201
211
221
231
241
251
261
271
281
291
301
311
321
331
341
351
361
371
381
391
306
308
Latency Sample # 304
Network RTT
Moving Average RTT

FIG. 3A

300b
Biased Moving Average RTT Over Time
Time (Cycles)
5000
4000
3000
2000
1000
0
104
306
1
11
21
31
41
51
61
71
81
91
101
111
121
131
141
151
161
171
181
191
201
211
221
231
241
251
261
271
281
291
301
311
321
331
341
351
361
371
381
391
Latency Sample #
Network RTT
Biased Moving Average RTT

FIG. 3B

400
FDR Timebox-Based Single-Flow DATA-only Drop (100us)
SeqNum
32665
32660
32655
32650
32645
32640
32635
32630
2200
2250
2300
2350
2400
2450
2500
Time (usec)
402
404
403a
403a
403a
160us
403a
32us
403a
403b
403c
406
408
Regular
Dropped
Retransmitted
Duplicated

FIG. 4

500
Network Endpoint 105
Adaptive Retransmission System 102
Communication Manager 502
Biased Moving Average Manager 504
Fast Timeout Event Manager 506
Regular Timeout Event Manager 508
Biased Moving Average Retransmission Time 104
Sending Unit 106
Receiving Unit 108

FIG. 5

600
Determining, by a sending network endpoint, a biased moving average retransmission time
610
Triggering a fast timeout event based on an amount of time that has elapsed since an oldest unacknowledged packet was sent in relation to the biased moving average retransmission time
620
During the fast timeout event, retransmitting the oldest unacknowledged packet to a receiving network endpoint, receiving, from the receiving network endpoint, an acknowledgment of the oldest unacknowledged packet, and retransmitting a next-oldest unacknowledged packet
630
Resuming, by the sending network endpoint, normal packet transmission in response to retransmitting previously unacknowledged packets during the fast timeout event
640

FIG. 6A

600
Determining, by a sending network endpoint, a biased moving average retransmission time based on an average packet delivery time over a predetermined previous period of time and a packet delivery time of a most recent packet
650
Triggering a fast timeout event based on an amount of time that has elapsed since an oldest unacknowledged packet being longer than the biased moving average retransmission time multiplied by a first predetermined amount
660
Triggering a regular timeout event based on the amount of time that has elapsed since the oldest unacknowledged packet being longer than the biased moving average retransmission time multiplied by a second predetermined amount
670
Resuming, by the sending network endpoint, normal packet transmission in response to retransmitting previously unacknowledged packets during the fast timeout event and the regular timeout event
680

FIG. 6B

700
Memory 703
Instructions 705
Data 707
Processor 701
Communication Interface(s) 709
719
Input Device(s) 711
Output Device(s) 713
Display Device 715
Display Controller 717

FIG. 7

Europäisches Patentamt
European Patent Office
Office européen des brevets

# EUROPEAN SEARCH REPORT

Application Number
EP 26 15 3353

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KUN TAN ET AL: "STODER: a robust and efficient algorithm for handling spurious retransmit timeouts in TCP", GLOBAL TELECOMMUNICATIONS CONFERENCE, 2005. GLOBECOM '05. IEEE ST. LOIUS, MO, USA 28 NOV.-2 DEC. 2005 PISCATAWAY, NJ, USA,IEEE, vol. 6, 28 November 2005 (2005-11-28), pages 3692-3696, XP010881773, DOI: 10.1109/GLOCOM.2005.1578460 ISBN: 9780780394148 * column 1, line 18 - column 3, line 35 * ----- | 1-15 | INV. H04L1/1867 |
| A | US 2016/094462 A1 (HEITZ JAKOB [US] ET AL) 31 March 2016 (2016-03-31) * abstract; figures 1,2 * * paragraph [0012] - paragraph [0016] * * paragraph [0033] * * paragraph [0039] * ----- | 1-15 | |
| | | | TECHNICAL FIELDS SEARCHED (IPC) |
| | | | H04L |

The present search report has been drawn up for all claims

1

| Place of search | Date of completion of the search | Examiner |
|---|---|---|
| The Hague | 15 May 2026 | Stevanovic, Natasa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 26 15 3353

This annex lists the patent family members relating to the patent documents cited in the above-mentioned European search report. The members are as contained in the European Patent Office EDP file on
The European Patent Office is in no way liable for these particulars which are merely given for the purpose of information.

15-05-2026

| Patent document cited in search report | Publication date | Patent family member(s) | Publication date |
|---|---|---|---|
| US 2016094462 A1 | 31-03-2016 | NONE | |

EPO FORM P0459

For more details about this annex : see Official Journal of the European Patent Office, No. 12/82